# EUROPÄISCHE PATENTSCHRIFT

(11) **EP 1 683 719 B1**
(45) Veröffentlichungstag und Bekanntmachung des Hinweises auf die Patenterteilung: **02.05.2012**
(21) Anmeldenummer: 05024513.3
(22) Anmeldetag: 10.11.2005
(51) Int. Cl.: B64D 11/06

(54) **Tischeinheit für einen Sitz**
Table unit for a seat
Unité de tablette pour un siège

(30) Priorität: 25.01.2005 DE 102005003285
(43) Veröffentlichungstag der Anmeldung: 26.07.2006
(73) Patentinhaber: Recaro Aircraft Seating GmbH & Co. KG, 74523 Schwäbisch Hall (DE)
(72) Erfinder: Schweizer, Oliver, 88161 Lindenberg (DE)
(74) Vertreter: Daub, Thomas

(56) Entgegenhaltungen:
- WO-A-03/064207
- DE-U1- 20 016 393
- US-A- 5 092 652
- US-A1- 2003 233 659

## Beschreibung

Die Erfindung betrifft eine Tischeinheit für einen Sitz gemäß der Merkmalsausgestaltung des Oberbegriffes des Patentanspruches 1.

Durch die DE 100 27 230 B4 ist eine Tischeinheit für Fahrzeugsitze, insbesondere Fluggastsitze, bekannt mit einem Tischteil, dem eine zuordenbare Tischfunktion zukommt, wobei ein weiteres Tischteil mit mindestens einer weiteren Tischfunktion vorhanden ist und wobei die beiden Tischteile relativ zueinander um eine erste Schwenkachse über mindestens eine Gelenkstelle drehbar und in vorgebbaren Positionen festlegbar sind. Ferner ist bei der bekannten Lösung vorgesehen, dass die beiden Tischteile um eine weitere Schwenkachse über mindestens eine weitere Gelenkstelle drehbar und in vorgebbaren Positionen festlegbar sind. Mit der dahingehend bekannten Ausgestaltung ist es möglich, verschiedene gewünschte Tischfunktionen in einer Tischeinheit zu integrieren und dennoch die mögliche Tischfläche und deren Position so zu variieren, insbesondere auch zu vergrößern, dass sie zum einen eine wirksame Arbeitshilfe darstellt und zum anderen die Essenseinnahme erleichtert. Bei der bekannten Lösung sind die beiden Tischteile in jeder relativen Position zueinander, um eine gemeinsame Drehachse verschwenkbar, die senkrecht zu den beiden Schwenkachsen verläuft und die Drehachse ist Teil eines Drehtellers, über den die beiden Tischteile an einen Tischarm angelenkt sind, der sich regelmäßig in einer Armlehne des Fahrzeug- oder Fluggastsitzes von Hand herausnehmbar unterbringen läßt. Die dahingehend bekannte Lösung weist eine Vielzahl von Vorteilen auf und wird von Sitzbenutzern als bedienfreundlich empfunden. Jedoch steht die dahingehend bekannte Lösung regelmäßig nur Nutzern der Business- oder First Class zur Verfügung, da die Realisierung der bekannten Lösung mit entsprechenden Kosten verbunden ist und darüber hinaus bei den Sitzen entsprechend groß dimensionierten Stauraum benötigt.

Des weiteren sind Tischvorrichtungen bekannt und auf dem Markt frei erhältlich, die sich auf der Rückseite der Rückenlehne von Fahrzeug- oder Fluggastsitzen befinden. Der bekannte Tisch als Tischeinheit ist dabei schwenkbar um eine mit der Rückenlehne verbundene Schwenkachse gelagert oder drehbar mit seitlichen Stützen verbunden, die als Teil einer Führungseinrichtung wiederum schwenkbar mit der Rückenlehne des Sitzes verbunden sind. Der Schwenkbereich der bekannten Tischeinheit ist nach oben hin relativ zum Sitz betrachtet durch die Rückenlehne begrenzt. In dieser Stellung ist die Tischeinheit für die Zeit des Nichtgebrauchs verriegelbar. Nach unten hin ist der Schwenkbereich derart begrenzt, dass die bekannte Tischeinheit in dieser Gebrauchsstellung nahezu waagerecht ist. Ein wesentliches Merkmal der dahingehend bekannten Lösungen ist es, dass die jeweilige Tischeinheit nicht von demjenigen Sitzbenutzer benutzt wird, der auf dem mit dem Tisch verbundenen Sitz sitzt, sondern von dem Sitzbenutzer, der in einem dahinter angeordneten weiteren Sitz Platz genommen hat. Ist die Tischeinheit, die nur ein Tischteil aufweist, in der waagerechten Gebrauchsstellung, hat der Tischnutzer die Möglichkeit, das dahingehende Tischteil entlang der Führungseinrichtung von der Rückenlehne weg auf sich zu zu ziehen, um dergestalt die Tischfläche des Tischteils direkt vor sich zur Nutzung zu haben, beispielsweise um dergestalt ein Essen einzunehmen. Bei der dahingehenden Ausgestaltung verbleibt eine Lücke zwischen dem ausgezogenen Tischteil und dem rückwärtigen Bereich der Rückenlehne, so dass zum einem dem Nutzer nur wenig Tischfläche zur Verfügung steht, beispielsweise um seine Zeitung, seine Brille oder dergleichen abzulegen und des weiteren kommt es häufig vor, dass insbesondere bei der Esseneinnahme durch die derart gebildete Lücke Bestandteile des Essen auf den Boden herunterfallen können.

Zwar ist in der DE 43 37 940 C2 bereits vorgeschlagen worden, Tischteile der Tischeinheit in horizontaler Richtung seitlich über eine Führungseinrichtung zu verschieben, was den Vorteil hat, dass man beim Wechseln von Sitzen und bei unterschiedlichen Sitzbreiten jedem in der Breite geänderten Sitz einen abklappbaren Tischteil zuordnen kann; allein auch bei der dahingehend bekannten Ausgestaltung entsteht die angesprochene Lücke mit den bereits aufgezeigten Nachteilen und die nutzbare Tischfläche ist gleichfalls reduziert.

Ferner ist durch die US 2003/233659 A1 eine gattungsgemäße Tischeinheit für einen Fluggastsitz bekannt mit zwei gegeneinander verschiebbaren Tischteilen, wobei ein Tischteil einen Bildschirm derart integriert, dass in seiner Nichtgebrauchsstellung dieser in eine U-förmige Ausnehmung im anderen Tischteil einklappbar ist, um dergestalt verstaut mittels der Schwenkeinrichtung in eine Stauposition im rückwärtigen Bereich der Rükkenlehne gebracht zu werden. Dabei ist ein Längsauszug des einen Tischteils mit dem anderen Tischteil gegenüber der Schwenkeinrichtung mittels einer offen gestalteten Führungseinrichtung möglich, die hierzu über Längsführungen verfügt, die randseitig an dem einen Tischteil angeordnet in zuordenbare Führungsrollen am freien Ende der Schwenkeinrichtung eingreifen.

Durch die US-A-5 092 652 ist eine Tischeinheit für einen Sitz bekannt, bei dem zwei Tischteile über randseitige Längsführungen gegeneinander verschiebbar sind, wobei wiederum eine Schwenkeinrichtung vorgesehen ist, mittels der sich die Tischeinheit an der Rückseite der Rückenlehne verstauen läßt. Eine entsprechende Anordnung jedoch mit nur einem Tischteil zeigt die WO 03/064207 A, bei der sich mittels einer Gestängehalterung das eine Tischteil federunterstützt in eine Gebrauchsstellung ausfahren läßt, sobald das Tischteil mit der Schwenkeinrichtung und der Gestängeführung vom Rückenlehnenbereich abgeklappt ist.

Durch das DE 200 16 393 U1 ist ein Klapptisch einschließlich für den Bereich Fluggastsitze bekannt, bei dem dieser in Teleskopschienen verfahrbar gelagert in einer Stautasche am rückwärtigen Bereich einer Rückenlehne sich verstauen läßt. In der ausgezogenen Gebrauchsstellung ist die bekannte Klapptischlösung mit zwei sog. Tablarplatten versehen, die in übereinander angeordneten Führungsnuten des Längsschienensystems eine Vielzahl an Gebrauchsmöglichkeiten für den Tisch eröffnen, insbesondere die Freigabe eines aus der Tischebene ausklappbaren Bildschirms erlauben, sobald die eine Tablarplatte unter die andere geschoben ist.

Trotz der Vielzahl an möglichen Gebrauchsstellungen und der damit einhergehenden Komforterhöhung lassen die bekannten Lösungen, was die Stabilität und die Funktionssicherheit anbelangt, noch Wünsche offen.

Ausgehend von diesem Stand der Technik liegt daher der Erfindung die Aufgabe zugrunde, die bekannten Lösungen unter Beibehalten ihrer Vorteile, nämlich sich platzsparend im rückwärtigen Bereich einer Rückenlehnenstruktur anordnen zu lassen, dennoch in der Gebrauchsstellung eine vergrößerte Tischfläche zu bieten und eine Getränkehalterung zu schaffen, bei der ein eingestelltes Getränkegefäß in seiner Position und mithin in einer Durchgriffsöffnung eines Tischteils verbleibt. Eine dahingehende Aufgabe löst eine Tischeinheit mit den Merkmalen des Patentanspruches 1 in seiner Gesamtheit.

Dadurch, dass gemäß dem kennzeichnenden Teil des Patentanspruches 1 eines der zwei Tischteile in Richtung des anderen Tischteils in der ausgezogenen Stellung des anderen Tischteils eine Längsführung aufweist, die in jeder Verfahrstellung des anderen Tischteils eine Überdeckung mit einer Durchgriffsöffnung des anderen Tischteils hat, ist es möglich, eine Getränkehalterung zu schaffen, bei der ein eingestelltes Getränkegefäß (Plastikbecher) in seiner Position und mithin in der Durchgriffsöffnung des Tischteils verbleibt, auch wenn die angesprochenen Tischteile zueinander verschoben werden, indem die Unterseite des eingesetzten Getränkegefäßes durch die gebildete Auflageseite der untergreifenden Längsführung des anderen Tischteils gestützt ist.

Ferner ist für einen Tischnutzer die Möglichkeit eröffnet, nach Abklappen der Tischeinheit in die Gebrauchsstellung zum einen zur Nutzung mindestens ein Tischteil längs der Führungseinrichtung zu sich heranzuziehen und mit mindestens einem weiteren relativ zu dem ersten Tischteil bewegbaren oder stationär angeordneten Tischteil die angesprochene Lücke zumindest teilweise zu schließen.

Dergestalt ist zum einen die nutzbare Tischfläche vergrößert und zum anderen sichergestellt, dass auf den Tischteilen befindliches Gut nicht ohne weiteres nach unten auf den Boden fallen kann. Aufgrund der relativen Bewegbarkeit der angesprochenen Tischteile zueinander, liegt es darüber hinaus im Ermessen des Tischnutzers, ob und in welchem Umfang er die Tischflächen der bewegbaren Tischteile nutzen möchte. Dies erhöht die Bedienfreundlichkeit der erfindungsgemäßen Tischeinheit, was von der Nutzerseite her als angenehm empfunden wird. Die erfindungsgemäße Tischeinheit mit ihren relativ zueinander bewegbaren Tischteilen ist einfach in der Handhabung und funktionssicher im Gebrauch. Dabei liegt es noch im Bereich der erfindungsgemäßen Ausgestaltung, bezogen auf die mögliche Relativbewegung der Tischteile zueinander, zumindest ein Tischteil an der Führungseinrichtung stationär festzulegen und die anderen Tischteile demgegenüber verschiebend zu bewegen.

Bei etwaig auftretenden Störfällen im Flug- oder Fahrbetrieb läßt sich die erfindungsgemäße Tischeinheit darüber hinaus platzsparend und rasch wieder im rückwärtigen Bereich der Rückenlehne verstauen. Demgemäß eignet sich die erfindungsgemäße Tischeinheit besonders für die Verwedung bei Fluggastsitzen; ist aber für die dahingehende Verwendung nicht eingeschränkt, sondern könnte auch im Bereich der Personenschifffahrt, bei Bussen, hochwertigen Fahrzeugen der Luxusklasse oder bei der Bestuhlung von Großgebäuden (Kino, Vortragssaal) eingesetzt werden. Die erfindungsgemäße Tischeinheit kommt vorzugsweise mit zwei ineinander verschiebbaren Tischteilen aus; es sind aber auch Varianten mit mehr Tischteilen möglich, wobei dann vorzugsweise ein jeweils in der Fläche kleineres Tischteil in einer Ausnehmung des nachfolgenden benachbarten größeren Tischteils ein- und aufschiebbar mittels der Führungseinrichtung gelagert ist.

Sofern bei einer weiteren bevorzugten Ausführungsform der erfindungsgemäßen Tischeinheit, die beiden Führungsschienen randseitig mit dem zuordenbaren Tischteil abschließen und überstandsfrei die obere und die untere Tischfläche dieses Tischteils begrenzen, wird für dieses Tischteil eine Aussteifung über die beiden randseitigen Führungsschienen erreicht, was zu einer hohen Stabilität führt, so dass hemmnisfrei das benachbarte Tischteil auf dieses Tischteil aufschiebbar ist.

Sofern vorzugsweise bei einer weiteren Tischeinheit vorgesehen ist, dass die Schwenkeinrichtung zwei Schwenkachsen aufweist, die über ein Gestänge miteinander in Wirkverbindung stehen, wobei die eine Schwenkachse sich am rückwärtigen Bereich der Rückenlehne in der Höhe der Tischteile befindet und die weitere Schwenkachse im darunter liegenden Bereich angeordnet ist, läßt sich mit nur einer Schwenkbewegung weit ausladend die Tischeinheit mit ihren Tischteilen auf den Tischnutzer zustellen.

Im Folgenden wird die erfindungsgemäße Tischeinheit anhand eines Ausführungsbeispiels nach der Zeichnung näher erläutert. Dabei zeigen in prinzipieller und nicht maßgeblicher Darstellung die
- Fig. 1: in perspektivisch rückwärtiger Ansicht und von Polster-und Bezugselementen freigehalten eine Fluggastsitz-einheit mit drei Fluggastsitzen nebst Tischeinheiten,
- Fig. 2: zwei relativ zueinander ausgezogene Tischteile einer Tischeinheit gemäß der Darstellung nach der Figur 1.

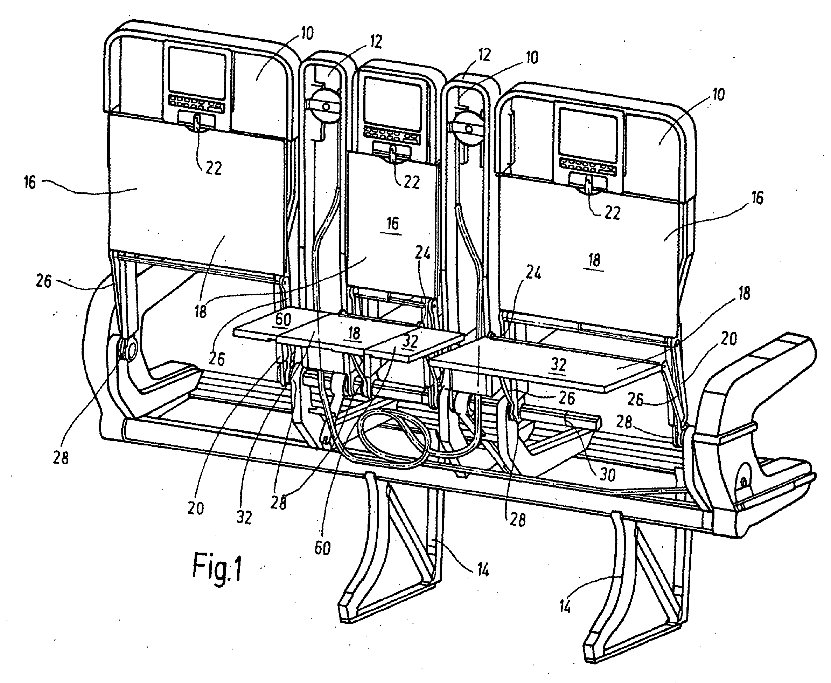

Die Fig. 1 zeigt in perspektivischer, rückwärtiger Ansicht eine Fluggastsitzeinheit mit drei Fluggastsitzen 10. Die Fluggastsitzeinheit ist in der Art eines sog. Convertible Seat System (CVS) ausgebildet, bei dem man aus drei einzelnen Fluggastsitzen 10 zwei Fluggastsitze mit vergrößerter Sitzbreite schaffen kann und umgekehrt, und zwar durch sinnfälligen Einsatz zweier Mittelarmlehnen 12. Dahingehende Convertible Seats gehören zum Stand der Technik, so dass an dieser Stelle hierauf auf die Einzelheiten nicht mehr näher eingegangen wird. Die Fluggastsitzeinheit mit ihren einzelnen Fluggastsitzen 10 ist von ihrem Grundaufbau her gezeigt und der einfacheren Darstellung wegen wurden Sitzschalenelemente, Polstermaterialien und Bezüge weggelassen. Die in Fig.1 gezeigte Fluggastsitzeinheit läßt sich über gemeinsame Ständerfüße 14 auf einen nicht näher dargestellten Kabinenboden eines Passagierflugzeuges aufständern.

In ihrem jeweils rückwärtigen Bereich der Sitze 10, also an ihren Rückenlehnen 16, weisen die einzelnen Fluggastsitze 10 an ihrer Oberseite einen Bildschirm mit Bedienfeld auf und darunterliegend ein Tischteil 18, das mittels einer Schwenkeinrichtung 20 von einer hochgeklappten Nichtgebrauchsstellung in eine heruntergeklappte Gebrauchsstellung schwenkbar ist. In Blickrichtung auf die Fig.1 gesehen ist ganz links das Tischteil 18 in seiner hochgeklappten Stellung gezeigt, wobei über einen quer verschwenkbaren Knebel 22 die dahingehende Festlegeposition unmittelbar an der Rückenwand der Rückenlehne 16 sichergestellt ist. Die beiden Sitze 10 rechts davon zeigen zur sinnfälligen Verdeutlichung einmal das jeweilige Tischteil 18 in der hochgeklappten verriegelten Stellung und einmal in der abgeklappten, im wesentlichen horizontalen Gebrauchsstellung gemäß der eingenommenen Lage der Sitzeinheit nach der Fig.1. Selbstredend ist für die dahingehenden Tischteile 18 immer nur jeweils eine Schwenkeinrichtung 20 vorhanden und nur eine einnehmbare Stellung (Gebrauch oder Nichtgebrauch sowie dazwischenliegende Zwischenstellungen).

Zum Lösen des Tischteils 18 von der Rückenlehne 16 wird der angesprochene Knebel 22 von Hand quer verschwenkt und zum Verriegeln eines hochgeklappten Tischteils 18 in seine Verriegelungsstellung nach der Fig.1 zurückgebracht, bei der die Unterseite des Knebels 22 in eine zuordenbare Ausnehmung an der Unterseite des Tischteils 18 angreift. Zum Hoch- und Herunterklappen des Tischteils 18 dient an der Schwenkeinrichtung eine erste querverlaufende Schwenkachse 24, die sich zwischen zwei Schwenkarmen 26 einer jeden Schwenkeinrichtung 20 erstreckt, wobei die Schwenkarme 26 in ihrem in Blickrichtung auf die Fig.1 gesehen unteren Bereich und mithin an ihrem unteren Ende über eine weitere zweite Schwenkachse 28 schwenkbar am Grundrahmen 30 der Fluggastsitzeinheit geführt sind.

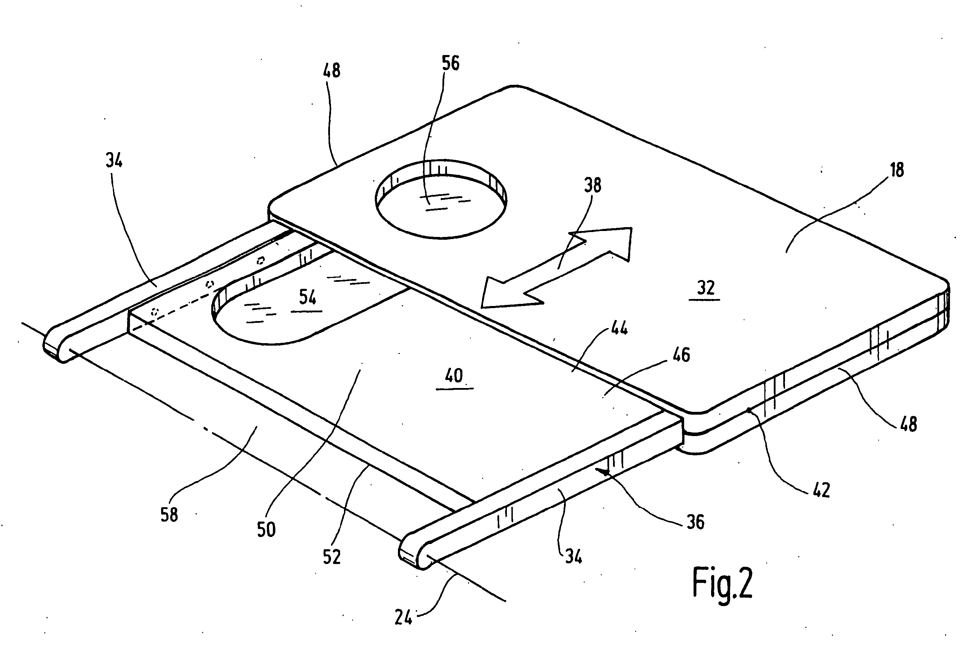

Mit der dahingehenden Schwenkeinrichtung 20 mit ihren beiden Schwenkachsen 24,28 ist es möglich, in einem weiten Zustellbereich das Tischteil 18 von der Rückenlehne 16 abzuklappen und auf den in der Sitzreihe dahinter sitzenden Sitznutzer (nicht dargestellt) zuzuschwenken. Die obere Tischfläche 32 des jeweiligen Tischteils 18 soll sich dabei nach Möglichkeit direkt unmittelbar vor dem Körper des Sitznutzers befinden, um diesem in Abhängigkeit seiner Körpergröße die Zugänglichkeit zur oberen Tischfläche 32 zu erleichtern, was beispielsweise für eine reibungslose Essenseinnahme eine Rolle spielt. Demgemäß ist im Stand der Technik auch schon vorgeschlagen worden, dem Sitz- oder Tischnutzer die Möglichkeit einzuräumen, das Tischteil 18 als Ganzes zu ihm herzuziehen, wobei das Tischteil 18 dann entlang von zwei Führungsschienen 34 einer als Ganzes mit 36 bezeichneten Führungseinrichtung verschiebbar gelagert ist. Während die in Flugrichtung gesehen hinteren Enden der Führungsschienen 34 in Richtung des ausgezogenen Tischteils 18 einmünden, sind die gegenüberliegenden freien vorderen Enden schwenkbar an der ersten Schwenkachse 24 der Schwenkeinrichtung 20 angelenkt. Die dahingehenden Ein- und Ausziehrichtungen, die gegenläufig sind, sind in der Fig.2 mit einem Doppelpfeil 38 wiedergegeben. Die dahingehende Anordnung von Tischteil 18 mit Schwenkeinrichtung 20 und Führungseinrichtung 36 ist üblich, so dass an dieser Stelle hierauf nur noch insofern eingegangen wird, als dies zur weiteren Beschreibung der erfindungsgemäßen Lösung notwendig ist.

Wie jedenfalls die Figuren zeigen, ist das Tischteil 18 entlang des Doppelpfeils 38 verschiebbar längs der Führungseinrichtung 36 an deren beiden Führungsschienen 34 gelagert und ist somit in rechtwinkliger Richtung zu der Schwenkachse 24 der Schwenkeinrichtung 20 verfahrbar (s. Fig.2). Neben dem genannten Tischteil 18 ist ein weiteres Tischteil 40 vorhanden, wobei die jeweiligen Tischteile 18,40 gemäß der Darstellung nach der Fig.2 zumindest in zur Tischfläche 32 eines Tischteils 18 parallelen Ebenen relativ zueinander bewegbar sind. Dabei kann von Hand zumindest das Tischteil 18 längs den Führungsschienen 34 in vorgebbaren Stellungen festlegbar sein, beispielsweise gemäß der Darstellung nach der Fig.2 in einer voll ausgezogenen Stellung. Ferner wäre es möglich, über nicht näher dargestellte Rastvorrichtungen 42, beispielsweise in Form von federbelasteten Rastkugeln, das Tischteil 18 in vorgebbaren Längseinstellungen an entsprechenden Kugelausnehmungen (nicht dargestellt) entlang den beiden voneinander abgewandten Außenseiten der Führungsschienen 34 rastend festzulegen, wobei die Raste mit geringen Betätigungskräften von Hand leicht lösbar ist, indem man das Tischteil 18 gegenüber der Führungseinrichtung 36 verschiebt.

Das in Fig.2 gezeigte eine Tischteil 18 weist in Blickrichtung gesehen eine Ausnehmung 44 auf, in der das andere vorgelagerte Tischteil 40 ein- und ausziehbar geführt ist. Zum dahingehenden Ein- und Ausziehen der jeweiligen Tischteile 18,40 zueinander sind Teile der Führungseinrichtung 36 in Form der beiden Führungsschienen 34 eingesetzt. Die Ausnehmung 44 bildet in Blickrichtung auf die Fig.2 nach vorne hin gesehen eine rahmenartig geschlossene Einschuböffnung 46, in die das weitere Tischteil 40 vollständig einschiebbar ist, indem das Tischteil 18 mit der größeren oberen Tischfläche 32 auf das gesamte weitere Tischteil 40 aufschiebbar ist. Anstelle der rahmenartig geschlossenen Ausnehmung 44 könnte bei einer nicht näher dargestellten Ausführungsform die dahingehende Ausnehmung in Blickrichtung auf die Fig.2 gesehen nach unten hin auch offen sein und dergestalt eine U-förmige Aufnahme ausbilden, bei der die beiden einander gegenüberliegenden Seitenwände 48 des Tischteils 18 zumindest teilweise den Außenumfang der jeweils zuordenbaren Führungsschiene 34 umfassen.

Das weitere zweite Tischteil 40 ist platzsparend zwischen den beiden Führungsschienen 34 der Führungseinrichtung 36 festgelegt und spannt dergestalt eine Ebene auf mit einer weiteren oberen Tischfläche 50, zu der parallel das jeweils weitere Tischteil 18 aus seiner in Fig.2 dargestellten ausgezogenen Stellung in die eingezogene Stellung schiebbar ist, bei der das Tischteil 18 zumindest teilweise das Tischteil 40 längs dessen weiterer Oberseite 50 umfaßt. Somit schließen die beiden Führungsschienen 34 randseitig mit dem zuordenbaren Tischteil 40 ab und begrenzen überstandsfrei die obere und die untere Tischfläche 50 bzw. 52 dieses Tischteils 40. Dergestalt ist besonders platzsparend und torsionsfest die Aufnahme des Tischteils 40 in der Führungseinrichtung 36 und damit dessen Anlenkung an der Schwenkeinrichtung 20 erreicht. Es entsteht dergestalt ein massiver Führungsblock, gebildet aus den beiden Führungsschienen 34 und dem weiteren Tischteil 40, so dass ein sehr stabiler Verbund an der Schwenkeinrichtung 20 realisiert ist, was zur Stabilisierung des im ausgezogenen Zustand auskragenden ersten Tischteils 18 beiträgt.

Bei einer weiteren, nicht näher dargestellten Ausführungsform ist darüber hinaus vorgesehen, dass die Ausnehmung 44 eine weitere, nicht dargestellte, nach hinten zum Sitznutzer gewandte Einschuböffnung aufweist, in die ein weiteres Einschub-Tischteil integrierbar ist. Ferner wäre es auch denkbar, im Sinne einer teleskopartigen Auszuglösung auf das Tischteil 18 einen weiteren Tischauszug auf dessen Oberseite 32 aufzusetzen.

Des weiteren ist vorgesehen, dass das Tischteil 40 in Richtung des benachbarten anderen Tischteils 18 in seiner ausgezogenen Stellung (s. Fig.2) eine Längsführung 54 aufweist, die in jeder Verfahrstellung des benachbarten Tischteils 18 eine Überdeckung mit einer Durchgriffsöffnung 56 dieses Tischteils hat. Sofern durch die Längenabmessungen der Tischteile 18,40 oder durch die eingenommene Relativlage der beiden Tischteile 18,40 zueinander sichergestellt ist, dass die Durchgriffsöffnung 56 die nach unten hin geschlossene Längsführung 54 überdeckt, kann ein in die Durchgriffsöffnung 56 gestellter Getränkebecher, beispielsweise Kaffeebecher, von der Unterseite der Längsführung 54 gestützt zum einen sicher gehalten und bei einer gegebenenfalls unbeabsichtigten Verfahrbewegung des Tischteils 18 mitgeführt werden, so dass ein Überschwappen des Getränks aus dem Behältnis (nicht dargestellt) aufgrund der derart erhaltenen Führung weitgehend ausgeschlossen ist.

In der Fig.1 ist eine konventionelle Fluggastsitzeinheit mit drei Fluggastsitzen 10 dargestellt, wie sie häufig im Economy-Bereich Einsatz findet. Im First-Class-Bereich ist aber häufig auch vorgesehen, einen dahingehenden Fluggastsitz 10 als Einzelsitz oder Doppelsitz in einen nicht näher dargestellten Schalenkörper (Shell) einzusetzen, so dass zur Nutzung der erfindungsgemäßen Tischeinheit die angesprochene Lösung dann an der Rückseite der Rückenlehnenstruktur, nunmehr in Form des angesprochenen Schalenkörpers (Shell), entsprechend anzubringen ist. Die aufgezeigte Schwenkeinrichtung 20 mit zwei Schwenkachsen 24,28 ist sehr vorteilhaft; es besteht aber auch die Möglichkeit, die erfindungsgemäße Tischeinheit mit einer Schwenkeinrichtung zu realisieren, die nur über eine Schwenkachse verfügt, bei der unmittelbar die in der Nichtgebrauchsstellung ineinander geschobenen Tischteile 18,40 gemeinsam von der Rückenlehne oder der Rückenlehnenstruktur in Form des Schalenkörpers nach Lösen der Verriegelung, beispielsweise in Form des Knebels 22, nach unten hin abgeklappt werden. Aus Gewichtsersparnisgründen ist vorzugsweise vorgesehen, dass zumindest das Tischteil 40 nicht massiv ausgebildet ist, sondern beispielsweise aus einem Schalenkörper besteht, gebildet aus einem Blech-oder Kunststoffmaterial, wobei bei einer Blechausgestaltung die Führung über die im Querschnitt quadratischen Führungsschienen 34 zu einer entsprechenden beulsteifen Ausgestaltung des Tischbleches für das Tischteil 40 führt.

Insbesondere wenn das weitere Tischteil 40 nicht vorhanden wäre, wie im Stand der Technik aufgezeigt, würde zwischen der Vorderseite des Tischteils 18, den beiden parallel zueinander verlaufenden Führungsschienen 34 der Führungseinrichtung 36 und dem rückwärtigen Bereich der jeweiligen Rückenlehnenstruktur eine Lücke 58 entstehen, die zwar bei der erfindungsgemäßen Lösung nicht ganz, aber im wesentlichen durch das Tischteil 40 geschlossen ist. Dergestalt ist die Wahrscheinlichkeit gering, dass auf den Tischteilen 18,40 aufliegendes Gut, beispielsweise in Form von Essen oder Geschirr, durch die Lücke 58 ungewollt auf den Boden fallen kann.

Wie des weiteren die Fig.1 zeigt, weist der mittlere Fluggastsitz 10 ein Tischteil 18 auf, das randseitig zwei abklappbare Tischteilkomponenten 60 aufweist. Zur Vergrößerung der Tischfläche sind die beiden Tischkomponenten 60 wie in Fig.1 dargestellt aufgeklappt und zur Verringerung der Tischfläche und beim Hochschwenken des Tischteils 18 in seine Nichtgebrauchsstellung werden die beiden Tischteilkomponenten 60 auf die obere Tischfläche 32 zurückgeklappt und das Tischteil 18 dann hochgeschwenkt und mittels des Knebels 22 in der Nichtgebrauchsstellung verriegelt.

## Patentansprüche

1. Tischeinheit für einen Sitz (10), insbesondere Fluggastsitz, mit einem ersten Tischteil (18), das mittels einer Schwenkeinrichtung (20) von einer Nichtgebrauchsstellung im rückwärtigen Bereich einer Rückenlehnenstruktur des Sitzes in eine Gebrauchsstellung verschwenkbar ist, bei der das erste Tischteil (18) mittels einer Führungseinrichtung (36) in einer zu einer ersten Schwenkachse (24) der Schwenkeinrichtung (20) rechtwinkligen Richtung bewegbar ist, wobei mindestens ein zweites Tischteil (40) vorhanden ist, die Tischteile (18, 40) zumindest in zu einer Tischfläche (32) eines der Tischteile (18) parallelen Ebenen relativ zueinander bewegbar sind, wobei zumindest eines der Tischteile (18) in vorgebbaren Stellungen festlegbar ist, **dadurch gekennzeichnet, dass** eines der zwei Tischteile (40) in Richtung des anderen Tischteils (18) in der ausgezogenen Stellung des anderen Tischteils (18) eine Längsführung (54) aufweist, die in jeder Verfahrstellung des anderen Tischteils (18) eine Überdeckung mit einer Durchgriffsöffnung (56) des anderen Tischteils (18) hat.

2. Tischeinheit nach Anspruch 1, **dadurch gekennzeichnet, dass** minde-stens ein Tischteil (18) eine Ausnehmung (44) aufweist, in der die je-weils anderen Tischteile (40) ein- und ausziehbar geführt sind.

3. Tischeinheit nach Anspruch 2, **dadurch gekennzeichnet, dass** zum Ein-und Ausziehen der Tischteile (18, 40) Teile der Führungseinrichtung (36) eingesetzt sind.

4. Tischeinheit nach Anspruch 2 oder 3, **dadurch gekennzeichnet, dass** die Ausnehmung (44) nach einer Seite hin eine rahmenartig geschlossene Einschuböffnung (46) ausbildet, in die das andere Tischteil (40) vollständig einschiebbar ist.

5. Tischeinheit nach einem der Ansprüche 1 bis 4, **dadurch gekennzeichnet, dass** eines der zwei Tischteile (40) zwischen zwei Führungsschienen (34) der Führungseinrichtung (36) festgelegt eine Ebene (50) aufspannt, zu der parallel das jeweils andere Tischteil (18) aus einer ausgezogenen Stellung in die eingezogene Stellung schiebbar ist.

6. Tischeinheit nach Anspruch 5, **dadurch gekennzeichnet, dass** die beiden Führungsschienen (34) randseitig mit einem der zwei Tischteile (40) abschließen und überstandsfrei die obere und die untere Tischfläche (50, 52) dieses Tischteils (40) begrenzen.

7. Tischeinheit nach einem der Ansprüche 1 bis 6, **dadurch** gekennzeich-net, dass sich die erste Schwenkachse (24) der Schwenkeinrichtung (20) am rückwärtigen Bereich der Rückenlehnenstruktur in Höhe der Tischteile (18, 40) befindet.

8. Tischeinheit nach Anspruch 7, **dadurch gekennzeichnet, dass** zwischen der ersten Schwenkachse (24) und dem ersten Tischteil (18) im ausgezogenen Zustand sich das zweite Tischteil (40) erstreckt, um zumindest teilweise eine Lücke (58) zwischen den Führungsschienen (34), dem ersten Tischteil (18) und der ersten Schwenkachse (24) zu schließen.

9. Tischeinheit nach Anspruch 7 oder 8, **dadurch gekennzeichnet, dass** die Schwenkeinrichtung (20) eine zweite Schwenkachse (28) aufweist, die erste Schwenkachse (24) und die zweite Schwenkachse (28) über ein Gestänge (26) miteinander in Wirkverbindung stehen und dass die zweite Schwenkachse (28) sich im unteren Bereich der Rückenlehnenstruktur befindet.

## Claims

1. Table unit for a seat (10), in particular an air passenger seat, with a first table part (18) which is pivotable by means of a pivoting device (20) from a non-use position in the rear region of a backrest structure of the seat into a use position, in which the first table part (18) is movable by means of a guide device (36) in a direction at right angles to a first pivot axis (24) of the pivoting device (20), wherein there is at least one second table part (40), the table parts (18, 40) being movable relative to each other at least in planes parallel to a table surface (32) of one of the table parts (18), wherein at least one of the table parts (18) is fixable in predeterminable positions, **characterized in that** one of the two table parts (40) has, in the extended position of the other table part (18), a longitudinal guide (54) in the direction of the other table part (18), said longitudinal guide (54) overlapping with a pass-through opening (56) in the other table part (18) in each movement position of the other table part (18).

2. Table unit according to Claim 1, **characterized in that** at least one table part (18) has a recess (44) in which the respective other table parts (40) are guided so as to be able to be retracted and extended.

3. Table unit according to Claim 2, **characterized in that**, in order to retract and extend the table parts (18, 40), use is made of parts of the guide device (36).

4. Table unit according to Claim 2 or 3, **characterized in that**, towards one side, the recess (44) forms an insertion opening (46) which is closed in the manner of a frame and into which the other table part (40) can be completely inserted.

5. Table unit according to one of Claims 1 to 4, **characterized in that** one of the two table parts, (40) fixed between two guide rails (34) of the guide device (36), spans a plane (50) parallel to which the respective other table part (18) can be pushed from an extended position into the retracted position.

6. Table unit according to Claim 5, **characterized in that** the two guide rails (34) end at the edge with one of the two table parts (40) and bound the upper and the lower table surfaces (50, 52) of said table part (40) without projecting therebeyond.

7. Table unit according to one of Claims 1 to 6, **characterized in that** the first pivot axis (24) of the pivoting device (20) is located at the rear region of the backrest structure level with the table parts (18, 40).

8. Table unit according to Claim 7, **characterized in that**, in the extended state, the second table part (40) extends between the first pivot axis (24) and the first table part (18) in order to at least partially close a gap (58) between the guide rails (34), the first table part (18) and the first pivot axis (24).

9. Table unit according to Claim 7 or 8, **characterized in that** the pivoting device (20) has a second pivot axis (28), the first pivot axis (24) and the second pivot axis (28) are operatively connected to each other via a linkage (26), and **in that** the second pivot axis (28) is located in the lower region of the backrest structure.

## Revendications

1. Unité de tablette pour un siège (10), en particulier un siège de passager d'avion, comprenant une première partie de tablette (18) qui est pivotable au moyen d'un dispositif de pivotement (20) d'une position de non utilisation dans la région arrière d'une structure de dossier de siège à une position d'utilisation, dans laquelle la première partie de tablette (18) peut être déplacée au moyen d'un dispositif de guidage (36) dans une direction à angle droit par rapport au premier axe de pivotement (24) du dispositif de pivotement (20), au moins une deuxième partie de tablette (40) étant prévue, les parties de tablette (18, 40) pouvant être déplacées l'une par rapport à l'autre au moins dans des plans parallèles à une surface de tablette (32) de l'une des parties de tablette (18), au moins l'une des parties de tablette (18) étant fixable dans des positions prédéfinissables, **caractérisée en ce que** l'une des deux parties de tablette (40) présente, dans la direction de l'autre partie de tablette (18), dans la position sortie de l'autre partie de tablette (18), un guide longitudinal (54), qui comprend dans chaque position de déplacement de l'autre partie de tablette (18) une enchevauchure avec une ouverture pour passer la main (56) de l'autre partie de tablette (18).

2. Unité de tablette selon la revendication 1, **caractérisée en ce qu'**au moins une partie de tablette (18) présente un évidement (44) dans lequel sont guidées de manière à pouvoir être rentrées et sorties les autres parties de tablette (40) respectives.

3. Unité de tablette selon la revendication 2, **caractérisée en ce que** pour rentrer et sortir les parties de tablette (18, 40), on utilise des parties du dispositif de guidage (36).

4. Unité de tablette selon la revendication 2 ou 3, **caractérisée en ce que** l'évidement (44) constitue vers un côté une ouverture d'insertion (46) fermée en forme de cadre dans laquelle l'autre partie de tablette (40) peut être complètement insérée.

5. Unité de tablette selon l'une quelconque des revendications 1 à 4, **caractérisée en ce que** l'une des deux parties de tablette (40) fixée entre deux rails de guidage (34) du dispositif de guidage (36) tend un plan (50) parallèlement auquel l'autre partie de tablette (18) respective peut être coulissée d'une position sortie dans la position rentrée.

6. Unité de tablette selon la revendication 5, **caractérisée en ce que** les deux rails de guidage (34) se terminent du côté du bord avec l'une des deux parties de tablette (40) et délimitent sans débordement les surfaces de tablette (50, 52) supérieure et inférieure de cette partie de tablette (40).

7. Unité de tablette selon l'une quelconque des revendications 1 à 6, **caractérisée en ce que** le premier axe de pivotement (24) du dispositif de pivotement (20) se trouve à la région arrière de la structure de dossier au niveau des parties de tablette (18, 40).

8. Unité de tablette selon la revendication 7, **caractérisée en ce que** la deuxième partie de tablette (40) s'étend entre le premier axe de pivotement (24) et la première partie de tablette (18), dans l'état sorti, afin de fermer au moins partiellement un espace vide (58) entre les rails de guidage (34), la première partie de tablette (18) et le premier axe de pivotement (24).

9. Unité de tablette selon la revendication 7 ou 8, **caractérisée en ce que** le dispositif de pivotement (20) présente un deuxième axe de pivotement (28), le premier axe de pivotement (24) et le deuxième axe de pivotement (28) étant en liaison fonctionnelle l'un avec l'autre par le biais d'une tringlerie (26), et **en ce que** le deuxième axe de pivotement (28) se trouve dans la région inférieure de la structure de dossier.
